(19) **Europäisches Patentamt**
**European Patent Office**
**Office européen des brevets**

(11) **EP 4 734 623 A1**

(12) **EUROPEAN PATENT APPLICATION**
published in accordance with Art. 153(4) EPC

(43) Date of publication:
**29.04.2026 Bulletin 2026/18**

(21) Application number: **24850851.7**

(22) Date of filing: **29.07.2024**

(51) International Patent Classification (IPC):
***H04W 64/00*** (2009.01)    ***H04W 72/04*** (2023.01)

(52) Cooperative Patent Classification (CPC):
**H04W 4/70; H04W 8/24; H04W 64/00; H04W 72/04**

(86) International application number:
**PCT/CN2024/108304**

(87) International publication number:
**WO 2025/031203 (13.02.2025 Gazette 2025/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **10.08.2023 CN 202311011334**

(71) Applicant: **Huawei Technologies Co., Ltd.**
**Shenzhen, Guangdong 518129 (CN)**

(72) Inventors:
• **GAO, Xin**
  **Shenzhen, Guangdong 518129 (CN)**
• **HUANG, Su**
  **Shenzhen, Guangdong 518129 (CN)**
• **XIN, Rui**
  **Shenzhen, Guangdong 518129 (CN)**

(74) Representative: **Gill Jennings & Every LLP**
**The Broadgate Tower**
**20 Primrose Street**
**London EC2A 2ES (GB)**

(54) **COMMUNICATION METHOD AND APPARATUS, AND STORAGE MEDIUM**

(57)    A communication method and apparatus, and a storage medium are disclosed. A first terminal sends first information, where the first information indicates a capability of the first terminal to process at least one piece of second information, and the second information includes an SL-PRS; and the first terminal receives and processes the at least one piece of second information based on the capability. When perceiving the at least one piece of second information sent to the first terminal in a first time unit, a third terminal does not send, in a first time length, data or an SL-PRS after the first time unit to the first terminal. According to the solution of this application, the first terminal reports the processing capability of the first terminal, to avoid a resource waste caused by another terminal sending an unnecessary SL-PRS when the first terminal processes the SL-PRS.

FIG. 4

**Description**

This application claims priority to Chinese Patent Application No. 202311011334.4, filed with the China National Intellectual Property Administration on August 10, 2023 and entitled "COMMUNICATION METHOD AND APPARATUS, AND STORAGE MEDIUM", which is incorporated herein by reference in its entirety.

**TECHNICAL FIELD**

This application relates to the field of communication technologies, and in particular, to a communication method and apparatus, and a storage medium.

**BACKGROUND**

In sidelink (sidelink, SL) communication, positioning measurement may be implemented by sending a sidelink positioning reference signal (sidelink positioning reference signal, SL-PRS). For a user equipment (user equipment, UE) receiving the SL-PRS, the UE needs to buffer the SL-PRS first, and then performs processing, for example, calculates time of arrival, an angle of arrival, and a phase of arrival, to obtain a positioning measurement result. However, different UEs may have different processing capabilities. When the UE processes the buffered SL-PRS signal, the UE likely cannot receive another SL-PRS. Therefore, there is no corresponding solution for how to avoid a resource waste caused by another UE sending an unnecessary SL-PRS when the receiver UE processes the SL-PRS.

**SUMMARY**

This application provides a communication method and apparatus, and a storage medium, to avoid a resource waste caused by another UE sending an unnecessary SL-PRS during processing of an SL-PRS.

According to a first aspect, a communication method is provided. The method may be performed by a terminal device, may be performed by a chip or a circuit configured in the terminal device, or may be performed by a logical module or software that can implement all or a part of functions of the terminal device. This is not limited in this application. The method includes: A first terminal sends first information, where the first information indicates a capability of the first terminal to process at least one piece of second information, and the second information includes an SL-PRS; and the first terminal receives and processes the at least one piece of second information based on the capability. In this aspect, the first terminal reports a processing capability of the first terminal, to avoid a resource waste caused by another terminal sending an unnecessary SL-PRS when the first terminal processes the SL-PRS.

In a possible implementation, the first information includes a first time length required by the first terminal to process the at least one piece of second information in a first time unit. In this implementation, the first terminal notifies another terminal of a processing time length required by the first terminal by reporting the first time length, to avoid a resource waste caused by the another terminal sending an unnecessary SL-PRS in the first time length.

In another possible implementation, that the first terminal receives and processes the at least one piece of second information based on the capability includes: The first terminal receives the at least one piece of second information in the first time unit, and processes the at least one piece of second information in the first time length. In this implementation, the first time length may include the first time unit, or may be after the first time unit. For the at least one piece of second information received in the first time unit, the first terminal needs to process the at least one piece of second information in the first time length, to improve information processing accuracy.

In still another possible implementation, the method further includes: The first terminal does not receive or does not process, in the first time length, an SL-PRS or data after the first time unit. In this implementation, the first terminal has received the at least one piece of second information in the first time unit, and needs to process the at least one piece of second information in the first time length. Therefore, the first terminal does not receive or does not process, in the first time length, the SL-PRS or the data after the first time unit, to improve information processing accuracy.

According to a second aspect, a communication method is provided. The method may be performed by a terminal device or a network device, may be performed by a chip or a circuit configured in the terminal device or the network device, or may be performed by a logical module or software that can implement all or a part of functions of the terminal device or the network device. This is not limited in this application. The following uses the terminal device as an example for description. The method includes: A second terminal receives first information from a first terminal, where the first information indicates a capability of the first terminal to process at least one piece of second information, and the second information includes an SL-PRS; and the second terminal sends, based on the capability of the first terminal to process the at least one piece of second information, a part or all of second information in the at least one piece of second information to the first terminal. In this aspect, the second terminal obtains the capability reported by the first terminal, and sends, based on the capability of the first terminal, the part or all of second information in the at least one piece of second information to the first terminal, so that the first terminal can process the part or all of second information, to avoid a resource waste.

In a possible implementation, the first information includes a first time length required by the first terminal to process the at least one piece of second information in a first time unit. In this implementation, the second terminal learns of a processing time length required by the first terminal to process the at least one piece of second information in the first time unit, so that the second terminal does not send an unnecessary SL-PRS in the first time length, to a resource waste.

In another possible implementation, that the second terminal sends, based on the capability of the first terminal to process the at least one piece of second information, the part or all of second information in the at least one piece of second information to the first terminal includes: The second terminal sends, in the first time unit, the part or all of second information in the at least one piece of second information to the first terminal. In this implementation, the first time length may include the first time unit, or may be after the first time unit.

In still another possible implementation, the method further includes: The second terminal does not send, in the first time length, an SL-PRS or data after the first time unit to the first terminal. In this implementation, the second terminal has sent, in the first time unit, the part or all of second information in the at least one piece of second information to the first terminal, and the first terminal needs to process the at least one piece of second information in the first time length. Therefore, the second terminal does not send, in the first time length, the SL-PRS or the data after the first time unit to the first terminal, to avoid a resource waste.

According to a third aspect, a communication method is provided. The method may be performed by a terminal device or a network device, may be performed by a chip or a circuit configured in the terminal device or the network device, or may be performed by a logical module or software that can implement all or a part of functions of the terminal device or the network device. This is not limited in this application. The following uses the terminal device as an example for description. The method includes: A third terminal receives first information from a first terminal, where the first information indicates a capability of the first terminal to process at least one piece of second information, the first information includes a first time length required by the first terminal to process the at least one piece of second information in a first time unit, and the second information includes an SL-PRS; and when perceiving the at least one piece of second information sent to the first terminal in the first time unit, the third terminal does not send, in the first time length, data or an SL-PRS after the first time unit to the first terminal. In this aspect, the third terminal learns of the capability of the first terminal, and perceives that another terminal sends, in the first time unit, the at least one piece of second information to the first terminal. Therefore, the third terminal does not send, in the first time length, the data or the SL-PRS after the first time unit to the first terminal, to avoid a resource waste.

According to a fourth aspect, a communication method is provided. The method may be performed by a terminal device, may be performed by a chip or a circuit configured in the terminal device, or may be performed by a logical module or software that can implement all or a part of functions of the terminal device. This is not limited in this application. The method includes: A first terminal sends first information, where the first information indicates a capability of the first terminal to process at least one piece of second information, the first information includes at least one of the following: a quantity of processes supported by the first terminal, and a processing time length required by the first terminal to process, in each process, the at least one piece of second information in a first time unit, and the second information includes an SL-PRS; and the first terminal receives and processes the at least one piece of second information based on the capability. In this aspect, the first terminal notifies another terminal of the capability of the first terminal to process the information by reporting the quantity of processes supported by the first terminal, so that information processing efficiency may be improved while avoiding a resource waste.

In a possible implementation, the first terminal supports at least two processes, where a processing time length corresponding to a first process is a first time length, and a processing time length corresponding to a second process is a second time length; and that the first terminal receives and processes the at least one piece of second information based on the capability includes: The first terminal receives and processes the at least one piece of second information in a second time unit, where a time length of the second time unit is a time length of the first time unit; and the first terminal receives and processes the at least one piece of second information in a third time unit, where a time length of the third time unit is the time length of the first time unit, where the third time unit is after the second time unit and is in the first time length. In this implementation, the first terminal may simultaneously process the received information in the at least two processes, thereby improving the information processing efficiency.

In another possible implementation, the method further includes: The first terminal does not receive or does not process, in the first time length, an SL-PRS or data after the third time unit. In this implementation, the first terminal has used its supported maximum quantity of processes to simultaneously process the received information, and the first terminal cannot receive another SL-PRS or data. Therefore, the first terminal does not receive or does not process, in the first time length, the SL-PRS or the data after the third time unit, to improve information processing accuracy.

According to a fifth aspect, a communication method is provided. The method may be performed by a terminal device or a network device, may be performed by a chip or a circuit configured in the terminal device or the network device, or may be performed by a logical module or software that can implement all or a part of functions of the terminal device or the network device. This is not limited in this application. The following uses the terminal device as an example for description. The method includes: A second terminal receives first information from a first terminal, where the first information indicates a capability of the first terminal to process at least one piece of second information, the first information includes at least one of the following: a quantity of processes supported by the first terminal, and a processing time length required by the first terminal to process, in each process, the at least one piece of second information in a first time unit, and the second information includes an SL-PRS; and the second terminal sends, based on the capability of the first terminal to process the at least one piece of second information, a part or all of second information in the at least one piece of second information to the first terminal. In this aspect, the second terminal learns of the quantity of processes supported by the first terminal, to learn of the capability of the first terminal to process the information; and sends the part or all of second information in the at least one piece of second information to the first terminal based on the capability, thereby improving transmission efficiency.

In a possible implementation, the first terminal supports at least two processes, where a processing time length corresponding to a first process is a first time length, and a processing time length corresponding to a second process is a second time length; and that the second terminal sends the part or all of second information in the at least one piece of second information to the first terminal based on the capability of the first terminal to process the at least one piece of second information includes: The second terminal sends, in the first time unit, the part or all of second information in the at least one piece of second information to the first terminal.

According to a sixth aspect, a communication method is provided. The method may be performed by a terminal device or a network device, may be performed by a chip or a circuit configured in the terminal device or the network device, or may be performed by a logical module or software that can implement all or a part of functions of the terminal device or the network device. This is not limited in this application. The following uses the terminal device as an example for description. The method includes: A third terminal receives first information from a first terminal, where the first information indicates a capability of the first terminal to process at least one piece of second information, the first terminal supports at least two processes, and the first information includes at least one of the following: a quantity of processes supported by the first terminal, a first time length, and a second time length, where the first time length is a processing time length required by the first terminal to process, in a first process, the at least one piece of second information in a second time unit, the second time length is a processing time length required by the first terminal to process, in a second process, the at least one piece of second information in a third time unit, and the second information includes an SL-PRS; the third terminal perceives that the first terminal receives the at least one piece of second information in the second time unit; and the third terminal sends, in a third time unit, at least one piece of second information to the first terminal, where the third time unit is after the second time unit and is in the first time length. In this aspect, the third terminal learns of the quantity of processes supported by the first terminal, and perceives that the first terminal receives the at least one piece of second information in the second time unit. The first terminal needs to process, in a part of processes, the at least one piece of second information received in the second time unit. The third terminal may further send, in the third time unit, the at least one piece of second information to the first terminal, thereby improving transmission efficiency.

In a possible implementation, the method further includes: The third terminal does not send data or an SL-PRS to the first terminal in the first time length after the third time unit. In this implementation, the third terminal perceives that the first terminal has used its supported maximum quantity of processes to simultaneously process the received information, and the first terminal cannot receive another SL-PRS or data. Therefore, the third terminal does not send the data or the SL-PRS to the first terminal in the first time length after the third time unit, to avoid a resource waste.

According to a seventh aspect, a communication apparatus is provided. The apparatus is configured to implement the communication method according to any one of the first aspect or the implementations of the first aspect. The apparatus may be a first terminal, may be a module (for example, a processor, a chip, or a chip system) used in the first terminal, or may be a logical node, a logical module, or software that can implement all or a part of functions of the first terminal.

In a possible implementation, the apparatus includes a transceiver unit and a processing unit. The transceiver unit is configured to send first information, where the first information indicates a capability of the first terminal to process at least one piece of second information, and the second information includes an SL-PRS. The transceiver unit is further configured to receive the at least one piece of second information based on the capability. The processing unit is configured to process the at least one piece of second information based on the capability.

Optionally, the first information includes a first time length required by the first terminal to process the at least one piece of second information in a first time unit.

Optionally, the transceiver unit is configured to receive the at least one piece of second information in the first time unit, and the processing unit is configured to process the at least one piece of second information in the first time length.

Optionally, the transceiver unit is further configured to not receive, in the first time length, an SL-PRS or data after the first time unit, or the processing unit is further configured to not process, in the first time length, an SL-PRS or data after the first time unit.

According to an eighth aspect, a communication apparatus is provided. The apparatus is configured to implement the communication method according to any one of the second aspect or the implementations of the second aspect. The apparatus may be a second terminal, may be a module (for example, a processor, a chip, or a chip system) used in the second terminal, or may be a logical node, a logical module, or software that can implement all or a part of functions of the second terminal.

In a possible implementation, the apparatus includes a transceiver unit, and may further include a processing unit. The transceiver unit is configured to receive first information from a first terminal, the first information indicates a capability of the first terminal to process at least one piece of second information, and the second information includes an SL-PRS. The transceiver unit is further configured to send, based on the capability of the first terminal to process the at least one piece of second information, a part or all of second information in the at least one piece of second information to the first terminal.

Optionally, the first information includes a first time length required by the first terminal to process the at least one piece of second information in a first time unit.

Optionally, the transceiver unit is configured to send, in the first time unit, the part or all of second information in the at least one piece of second information to the first terminal.

Optionally, the transceiver unit is further configured to not send, in the first time length, an SL-PRS or data after the first time unit to the first terminal.

According to a ninth aspect, a communication apparatus is provided. The apparatus is configured to implement the communication method according to any one of the third aspect or the implementations of the third aspect. The apparatus may be a third terminal, may be a module (for example, a processor, a chip, or a chip system) used in the third terminal, or may be a logical node, a logical module, or software that can implement all or a part of functions of the third terminal.

In a possible implementation, the apparatus includes a transceiver unit, and may further include a processing unit. The transceiver unit is configured to receive first information from a first terminal, the first information indicates a capability of the first terminal to process at least one piece of second information, the first information includes a first time length required by the first terminal to process the at least one piece of second information in a first time unit, and the second information includes an SL-PRS. The transceiver unit is further configured to: when perceiving the at least one piece of second information sent to the first terminal in the first time unit, not send, in the first time length, data or an SL-PRS after the first time unit to the first terminal.

According to a tenth aspect, a communication apparatus is provided. The apparatus is configured to implement the communication method according to any one of the fourth aspect or the implementations of the fourth aspect. The apparatus may be a first terminal, may be a module (for example, a processor, a chip, or a chip system) used in the first terminal, or may be a logical node, a logical module, or software that can implement all or a part of functions of the first terminal.

In a possible implementation, the apparatus includes a transceiver unit and a processing unit. The transceiver unit is configured to send first information, where the first information indicates a capability of the first terminal to process at least one piece of second information, the first information includes at least one of the following: a quantity of processes supported by the first terminal, and a processing time length required by the first terminal to process, in each process, the at least one piece of second information in a first time unit, and the second information includes an SL-PRS. The transceiver unit is further configured to receive the at least one piece of second information based on the capability. The processing unit is configured to process the at least one piece of second information based on the capability.

Optionally, the first terminal supports at least two processes, where a processing time length corresponding to a first process is a first time length, and a processing time length corresponding to a second process is a second time length. The transceiver unit is configured to receive the at least one piece of second information in a second time unit, and the processing unit is configured to process the at least one piece of second information in the second time unit, where a time length of the second time unit is a time length of the first time unit. The transceiver unit is further configured to receive the at least one piece of second information in a third time unit, and the processing unit is further configured to process the at least one piece of second information in the third time unit, where a time length of the third time unit is the time length of the first time unit. The third time unit is after the second time unit and is in the first time length.

Optionally, the transceiver unit is further configured to not receive, in the first time length, an SL-PRS or data after the third time unit, or the processing unit is further configured to not process an SL-PRS or data after the third time unit.

According to an eleventh aspect, a communication apparatus is provided. The apparatus is configured to implement the communication method according to any one of the fifth aspect or the implementations of the fifth aspect. The apparatus may be a second terminal, may be a module (for example, a processor, a chip, or a chip system) used in the second terminal, or may be a logical node, a logical module, or software that can implement all or a part of functions of the second terminal.

In a possible implementation, the apparatus includes a transceiver unit, and may further include a processing unit. The transceiver unit is configured to receive first information from a first terminal, where the first information indicates a capability of the first terminal to process at least one piece of second information, the first information includes at least one of the following: a quantity of processes supported by the first terminal, and a processing time length required by the first terminal to process, in each process, the at least one piece of second information in a first time unit, and the second information includes an SL-PRS. The transceiver unit is further configured to send, based on the capability of the first terminal to process the at least one piece of second information, a part or all of second information in the at least one piece of second information to the first terminal.

Optionally, the first terminal supports at least two processes, where a processing time length corresponding to a first process is a first time length, and a processing time length corresponding to a second process is a second time length. The transceiver unit is further configured to send, in the first time unit, the part or all of second information in the at least one piece of second information to the first terminal.

According to a twelfth aspect, a communication apparatus is provided. The apparatus is configured to implement the communication method according to any one of the sixth aspect or the implementations of the sixth aspect. The apparatus may be a third terminal, may be a module (for example, a processor, a chip, or a chip system) used in the third terminal, or may be a logical node, a logical module, or software that can implement all or a part of functions of the first terminal.

In a possible implementation, the apparatus includes a transceiver unit and a processing unit. The transceiver unit is configured to receive first information from a first terminal, where the first information indicates a capability of the first terminal to process at least one piece of second information, the first terminal supports at least two processes, and the first information includes at least one of the following: a quantity of processes supported by the first terminal, a first time length, and a second time length, where the first time length is a processing time length required by the first terminal to process, in a first process, the at least one piece of second information in a second time unit, the second time length is a processing time length required by the first terminal to process, in a second process, the at least one piece of second information in a third time unit, and the second information includes an SL-PRS; the processing unit is configured to perceive that the first terminal receives the at least one piece of second information in the second time unit. The transceiver unit is further configured to send, in a third time unit, the at least one piece of second information to the first terminal, where the third time unit is after the second time unit and is in the first time length.

Optionally, the transceiver unit is further configured to not send data or an SL-PRS to the first terminal in the first time length after the third time unit.

In another possible implementation, the communication apparatus according to any one of the seventh aspect to the twelfth aspect includes a processor, and the processor is configured to implement a corresponding function in the foregoing communication method performed by the apparatus. Optionally, the apparatus further includes a memory. The memory is configured to be coupled to the processor, and stores a program (instructions) and/or data necessary for the apparatus. Optionally, the communication apparatus may further include a communication interface, configured to implement communication between the apparatus and another network element. Optionally, the memory may be located inside the communication apparatus, or may be located outside the communication apparatus.

In another possible implementation, the communication apparatus according to any one of the seventh aspect to the twelfth aspect includes a processor and a transceiver apparatus, the processor is coupled to the transceiver apparatus, and the processor is configured to execute a computer program or instructions to control the transceiver apparatus to receive and send information; and when the processor executes the computer program or the instructions, the processor is further configured to implement the foregoing method through a logic circuit or by executing code instructions. The transceiver apparatus may be a transceiver, a transceiver circuit, or an input/output interface, and is configured to receive a signal from a communication apparatus other than the communication apparatus and transmit the signal to the processor, or send a signal from the processor to a communication apparatus other than the communication apparatus. When the communication apparatus is a chip, the transceiver apparatus is the transceiver circuit or the input/output interface.

When the communication apparatus according to any one of the seventh aspect to the twelfth aspect is the chip, a sending unit may be an output unit, for example, an output circuit or a communication interface; and a receiving unit may be an input unit, for example, an input circuit or a communication interface. When the communication apparatus is a terminal, a sending unit may be a transmitter or a transmitter machine; and a receiving unit may be a receiver or a receiver machine.

With reference to any one of the first aspect to the twelfth aspect, in still another possible implementation, the first time unit includes any one of the following: a slot, a subframe, and an orthogonal frequency division multiplexing symbol. In this implementation, the first time unit may be one slot, one subframe, or one orthogonal frequency division multiplexing symbol.

With reference to any one of the first aspect to the twelfth aspect, in still another possible implementation, a unit of the first time length includes any one of the following: a slot, a subframe, and an orthogonal frequency division multiplexing symbol.

With reference to any one of the first aspect to the twelfth aspect, in still another possible implementation, the first information further includes at least one of the following: a maximum bandwidth that is of an SL-PRS and that is supported by the first terminal, and a maximum quantity of pieces of second information that are capable of being processed by the first terminal and that are in the first time unit. In this implementation, the maximum bandwidth that is of the SL-PRS and that is supported by the first terminal affects the processing capability of the first terminal, and the maximum quantity of pieces of second information that are capable of being processed by the first terminal and that are in the first time unit may also represent the processing capability of the first terminal. Therefore, the first terminal may further report the foregoing first information, so that second information sent by another terminal does not exceed the processing capability of the first terminal, to avoid a resource waste.

With reference to any one of the first aspect to the twelfth aspect, in still another possible implementation, the second information further includes at least one physical sidelink control channel (physical sidelink control channel, PSCCH), and the at least one PSCCH indicates whether at least one SL-PRS exists in the first time unit. In this implementation, in a sidelink positioning technology, each SL-PRS is associated with one PSCCH. Therefore, when the first terminal receives the at least one piece of second information in the first time unit, the second information includes the PSCCH and the SL-PRS. The first terminal needs to buffer the PSCCH and the SL-PRS, and measures the SL-PRS only after parsing the PSCCH to know about whether the SL-PRS exists in the first time unit. Therefore, in the sidelink positioning technology, the processing capability reported by the terminal further includes a capability of processing the PSCCH, so that information can be reported more accurately, to avoid a resource waste caused by another terminal sending an unnecessary SL-PRS or data when the first terminal processes the PSCCH and the SL-PRS.

With reference to any one of the first aspect to the twelfth aspect, in still another possible implementation, the first information is carried in any one of the following messages: a sidelink long term evolution positioning protocol (sidelink LTE positioning protocol, SLPP) message, a radio resource control (radio resource control, RRC) message, and a long term evolution positioning protocol (LTE positioning protocol, LPP) message.

According to a thirteenth aspect, a communication system is provided, and includes the communication apparatus according to any one of the seventh aspect or the implementations of the seventh aspect, the communication apparatus according to any one of the eighth aspect or the implementations of the eighth aspect, and the communication apparatus according to any one of the ninth aspect or the implementations of the ninth aspect.

According to a fourteenth aspect, a communication system is provided, and includes the communication apparatus according to any one of the tenth aspect or the implementations of the tenth aspect, the communication apparatus according to any one of the eleventh aspect or the implementations of the eleventh aspect, and the communication apparatus according to any one of the twelfth aspect or the implementations of the twelfth aspect.

According to a fifteenth aspect, a computer-readable storage medium is provided. The computer-readable storage medium stores a computer program or instructions. When the computer program or the instructions are executed, the method according to any one of the foregoing aspects or the possible implementations of the foregoing aspects is implemented.

According to a sixteenth aspect, a computer program product including instructions is provided. When the instructions are run on a communication apparatus, the communication apparatus is caused to perform the method according to any one of the foregoing aspects or the possible implementations of the foregoing aspects.

## BRIEF DESCRIPTION OF DRAWINGS

FIG. 1 is a diagram of an architecture of a communication system to which an embodiment of this application is applied;
FIG. 2a is a diagram of an example in which all UEs are in network coverage;
FIG. 2b is a diagram of an example in which a part of UEs are in network coverage;
FIG. 2c is a diagram of an example in which all UEs are out of network coverage;
FIG. 3 is a diagram of sidelink-based trilateration according to an embodiment of this application;
FIG. 4 is a schematic flowchart of a communication method according to an embodiment of this application;
FIG. 5 is a schematic flowchart of another communication method according to an embodiment of this application;
FIG. 6 is a diagram of an example of a processing capability of a first terminal according to an embodiment of this application;
FIG. 7 is a schematic flowchart of still another communication method according to an embodiment of this application;
FIG. 8 is a schematic flowchart of still another communication method according to an embodiment of this application;
FIG. 9 is a diagram of an example in which a terminal processes an SL-PRS in a plurality of processes according to an embodiment of this application;
FIG. 10 is a diagram of a structure of a communication apparatus according to an embodiment of this application; and
FIG. 11 is a diagram of a structure of another communication apparatus according to an embodiment of this application.

## DESCRIPTION OF EMBODIMENTS

The following describes embodiments of this application with reference to the accompanying drawings in embodiments of this application.

"At least one piece (item)" in this application below indicates one piece (item) or a plurality of pieces (items). A plurality of pieces (items) means two or more pieces (items). "And/or" describes an association relationship between associated objects, and indicates that three relationships may exist. For example, A and/or B may indicate the following three cases: Only A exists, both A and B exist, and only B exists. The character "/" generally indicates an "or" relationship between the associated objects. In addition, it may be understood that, although terms such as first and second may be used in this application to describe objects, the objects are not limited to the terms. The terms are merely used for distinguishing the objects from each other.

The terms "including", "having", and any variations thereof mentioned in the following descriptions of this application are intended to cover a non-exclusive inclusion. For example, a process, a method, a system, a product, or a device that includes a series of steps or units is not limited to listed steps or units, but optionally further includes another unlisted step or unit, or optionally further includes another inherent step or unit of the process, the method, the product, or the device. It should be noted that in this application, the term like "example" or "for example" is used to represent giving an example, an illustration, or descriptions. Any method or design solution described as an "example" or "for example" in this application should not be explained as being more preferred or having more advantages than another method or design solution. Exactly, use of the words such as "example" or "for example" is intended to present a relative concept in a specific manner.

The technologies provided in this application may be applied to various communication systems. For example, the communication system may be a 4th generation (4th generation, 4G) communication system (for example, a long term evolution (long term evolution, LTE) system), a 5th generation (5th generation, 5G) communication system, a worldwide interoperability for microwave access (worldwide interoperability for microwave access, WiMAX) or wireless local area network (wireless local area network, WLAN) system, a converged system including a plurality of systems, or a future communication system like a 6G communication system. The 5G communication system may also be referred to as a new radio (new radio, NR) system.

It should be noted that, terms "system" and "network" in embodiments of this application may be used interchangeably.

A network element in the communication system may send a signal to another network element or receive a signal from another network element. The signal may include information, signaling, data, or the like. The network element may alternatively be replaced with an entity, a network entity, a device, a terminal device, a communication module, a node, a communication node, or the like. In this application, the network element is used as an example for description. For example, the communication system may include at least one terminal device and at least one access network device. The access network device may send a downlink signal to the terminal device, and/or the terminal device may send an uplink signal to the access network device. In addition, it may be understood that, if the communication system includes a plurality of terminal devices, the plurality of terminal devices may also send signals to each other. In other words, both a signal sending network element and a signal receiving network element may be terminal devices.

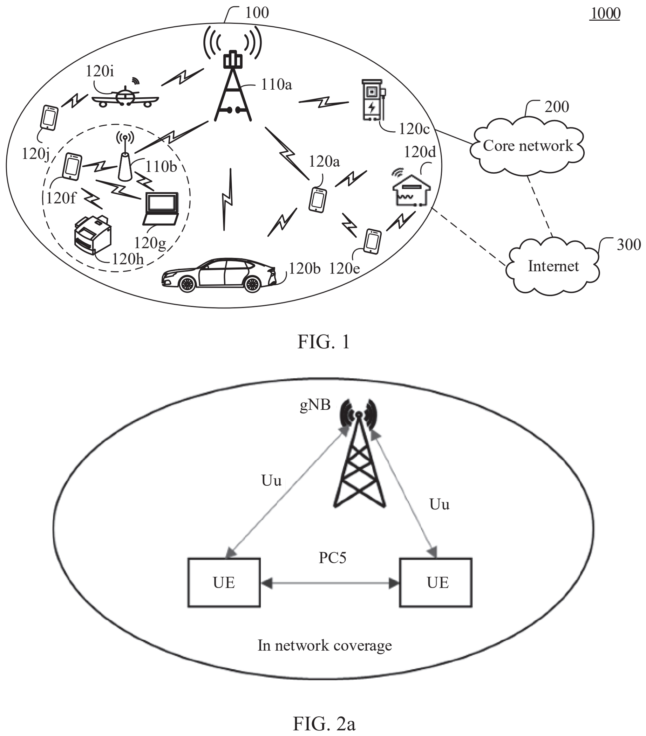

FIG. 1 is a diagram of an architecture of a communication system to which an embodiment of this application is applied. As shown in FIG. 1, a communication system 1000 includes a radio access network 100 and a core network 200. Optionally, the communication system 1000 may further include an internet 300. The radio access network 100 may include at least one radio access network device (for example, 110a and 110b in FIG. 1), and may further include at least one terminal (for example, 120a to 120j in FIG. 1). The terminal is connected to the radio access network device in a wireless manner, and the radio access network device is connected to the core network in a wireless or wired manner. A core network device and the radio access network device may be independent and different physical devices, functions of the core network device and logical functions of the radio access network device may be integrated into a same physical device, or some functions of the core network device and some functions of the radio access network device may be integrated into one physical device. A wired or wireless manner may be used for connection between terminals and between radio access network devices. FIG. 1 is only a diagram. Both the core network device and the radio access network device may be referred to as network devices. The communication system may further include other network devices, for example, a wireless relay device and a wireless backhaul device, which are not shown in FIG. 1.

The radio access network (radio access network, RAN) device may be a device having a wireless transceiver function, or may be a chip or a chip system disposed in the device; and is located in an access network (access network, AN) of the communication system, to provide an access service for the terminal. The radio access network device may be specifically a next generation mobile communication system, for example, a 6G access network device like a 6G base station. Alternatively, in a next generation mobile communication system, the network device may be named in another manner, which falls in the protection scope of embodiments of this application. This is not limited in this application. Alternatively, the network device may include a gNB in 5G, for example, a new radio (new radio, NR) system, may include one or a group of antenna panels (including a plurality of antenna panels) of a base station in 5G, or may be a network node that forms a gNB, a transmission point (transmission reception point, TRP, or transmission point, TP), or a transmission measurement function (transmission measurement function, TMF). For example, the network device may be a central unit (central unit, CU), a distributed unit (distributed unit, DU), a CU-control plane (control plane, CP), a CU-user plane (user plane, UP), a radio unit (radio unit, RU), an RSU having a base station function, a wired access gateway, or a 5G core network element. Alternatively, the network device may further include an access point (access point, AP) in a wireless fidelity (wireless fidelity, Wi-Fi) system, a wireless relay node, a wireless backhaul node, macro base stations in various forms (for example, 110a in FIG. 1), a micro base station or an indoor base station (also referred to as a small cell) (for example, 110b in FIG. 1), a relay station, an access point, a wearable device, a vehicle-mounted device, and the like.

The CU and the DU may be separately disposed, or may be included in a same network element, for example, in a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). It may be understood that, the network device may be a CU node, a DU node, or a device including a CU node and a DU node. In addition, the CU may be classified as a network device in the access network RAN, or the CU may be classified as a network device in the core network CN. This is not limited herein.

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any unit of the CU (or the CU-CP and the CU-UP), the DU, and the RU in this application may be implemented by using a software module, a hardware module, or a combination of a software module and a hardware module.

A form of the network device is not limited in embodiments of this application. An apparatus configured to implement a function of the network device may be a network device, or may be an apparatus, for example, a chip system, that can support the network device in implementing the function. The apparatus may be installed in the network device or used in cooperation with the network device.

For ease of description, the following provides descriptions by using an example in which the radio access network device is a base station.

The terminal may alternatively be referred to as a terminal device, a user equipment (user equipment, UE), a mobile station, a mobile terminal, or the like. The terminal may be widely used in various scenarios, for example, device-to-device (device-to-device, D2D), vehicle--to-everything (vehicle-to-everything, V2X) communication, machine type communication (machine type communication, MTC), an internet of things (internet of things, IoT), virtual reality, augmented reality, industrial control, autonomous driving, telemedicine, a smart grid, smart furniture, a smart office, a smart wearable, smart transportation, and a smart city. The terminal may be specifically a mobile phone, a tablet computer, a computer having a wireless transceiver function, a wearable device, a vehicle, an uncrewed aerial vehicle, a helicopter, an airplane, a ship, a robot, a robot arm, a smart home device, a road side unit (road side unit, RSU), a vehicle-mounted module, a vehicle-mounted component, a chip, an entire vehicle, or the like. A specific technology and a specific device form that are used by the terminal are not limited in embodiments of this application.

The base station and the terminal may be fixed or movable. The base station and the terminal may be deployed on the land, including an indoor device, an outdoor device, a handheld device, or a vehicle-mounted device; may be deployed on the water; or may be deployed on an airplane, a balloon, and an artificial satellite in the air. Application scenarios of the base station and the terminal are not limited in embodiments of this application.

Roles of the base station and the terminal may be relative. For example, a helicopter or an uncrewed aerial vehicle 120i in FIG. 1 may be configured as a mobile base station. For the terminal 120j that accesses the radio access network 100 through 120i, the terminal 120i is a base station. However, for the base station 110a, 120i is a terminal device. In other words, communication between 110a and 120i is performed based on a radio air interface protocol. Certainly, communication between 110a and 120i may alternatively be performed based on an interface protocol between base stations. In this case, for 110a, 120i is also a base station. Therefore, both the base station and the terminal may be collectively referred to as communication apparatuses. 110a and 110b in FIG. 1 may be referred to as communication apparatuses having a function of a base station, and 120a to 120j in FIG. 1 may be referred to as communication apparatuses having a function of a terminal.

Communication between the base station and the terminal, between base stations, or between terminals may be performed by using a licensed spectrum, may be performed by using an unlicensed spectrum, or may be performed by using both the licensed spectrum and the unlicensed spectrum. Communication may be performed by using a spectrum below 6 gigahertz (gigahertz, GHz), may be performed by using a spectrum above 6 GHz, or may be performed by using both the spectrum below 6 GHz and the spectrum above 6 GHz. A spectrum resource for wireless communication is not limited in embodiments of this application.

In embodiments of this application, the function of the base station may alternatively be performed by a module (for example, a chip) in the base station, or may be performed by a control subsystem having the function of the base station. The control subsystem having the function of the base station herein may be a control center in the foregoing application scenarios such as the smart grid, the industrial control, the smart transportation, and the smart city. The function of the terminal may alternatively be performed by a module (for example, a chip or a modem) in the terminal, or may be performed by an apparatus having the function of the terminal.

In this application, the base station sends a downlink signal or downlink information to the terminal, where the downlink information is carried on a downlink channel. The terminal sends an uplink signal or uplink information to the base station, where the uplink information is carried on an uplink channel. To communicate with the base station, the terminal establishes a wireless connection to a cell controlled by the base station. The cell that establishes the wireless connection to the terminal is referred to as a serving cell of the terminal. When communicating with the serving cell, the terminal is further interfered by a signal from a neighboring cell.

In addition, because of mobility, the UE may be sometimes in network coverage, and sometimes may be out of the network coverage. At least two UEs that perform sidelink communication with each other may be all in the network coverage, may be partially in the network coverage, or may be all out of the network coverage. FIG. 2a to FIG. 2c each are a diagram of an example of network coverage that UEs are in. The following provides detailed descriptions.

As shown in FIG. 2a, all UEs may be in network coverage (in-coverage) of a network device (for example, a gNB in FIG. 2a), in other words, UEs each may communicate with the network device through a Uu interface. The UEs may perform sidelink communication with each other through a PC5 interface.

The Uu interface, namely, a cellular communication interface, mainly refers to a communication interface between the UE and the network device, includes an uplink and a downlink, and is characterized by implementing reliable communication in a long distance and a larger range.

The PC5 interface, namely, a direct communication interface, mainly refers to a communication interface between terminals, to be specific, a short-distance direct communication interface between vehicles, people, and road infrastructures. The interface is characterized by implementing low-latency, high-capacity, and highly-reliable communication through direct connection, broadcast, and network scheduling.

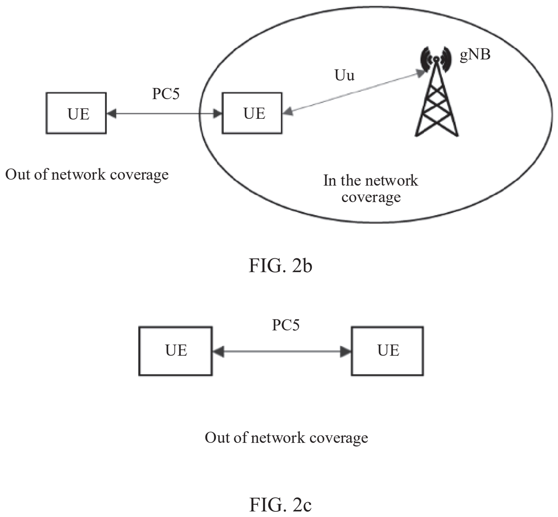

FIG. 2b is a diagram in which UEs are partially in network coverage (partial coverage) of a network device. The partial coverage means that one UE may communicate with a gNB through a Uu interface, and another UE can communicate with the UE in the coverage of the network device only through a PC5 interface.

FIG. 2c is a diagram in which all UEs are out of network coverage (out-of-coverage) of a network device. The out-of-coverage means that two UEs either cannot communicate with a gNB, and can communicate with each other only through a PC5 interface.

This application relates to sidelink positioning. The sidelink positioning may be a positioning technology in a newly defined sidelink condition, or may be a positioning function added based on existing sidelink communication. In a sidelink scenario, a specific positioning method is not fundamentally different from a Uu interface positioning method. The only difference is that reference signals used by a transmitter and a receiver are different. In the sidelink positioning, a positioning function is implemented by using an SL-PRS. In addition, a resource pool for positioning (resource pool for positioning) is defined for sending and receiving the SL-PRS. In addition, the SL-PRS may also be sent together with data in a shared resource pool. The resource pool herein may be understood as a group of (pre-)configured time-frequency resources, and is a common configuration. To be specific, all UEs that use the resource pool to perform data transmission and reception use same configuration information.

This application may support a plurality of positioning technologies such as a downlink time difference of arrival (downlink time difference of arrival, DL-TDOA), a downlink angle of departure (downlink angle of departure, DL-AOD), an uplink time difference of arrival (uplink time difference of arrival, UL-TDOA), an uplink angle of arrival (uplink angle of arrival, UL-AOA), and multi-round trip time (multi-round trip time, multi-RTT). The DL-TDOA, UL-TDOA, and multi-RTT algorithm are time-of-arrival-based positioning technologies. To be specific, a receive end needs to measure time of arrival of a signal sent by a transmit end, and then convert the time of arrival into information about a distance between the receive end and the transmit end, to finally obtain a location of a to-be-positioned target. The DL-AOD and the UL-AOA are angle-based positioning technologies. To be specific, a receive end measures an angle of arrival of a reference signal sent by a transmit end, and infers a location of the receive end based on angle information between the receive end and a plurality of transmit ends whose locations are known.

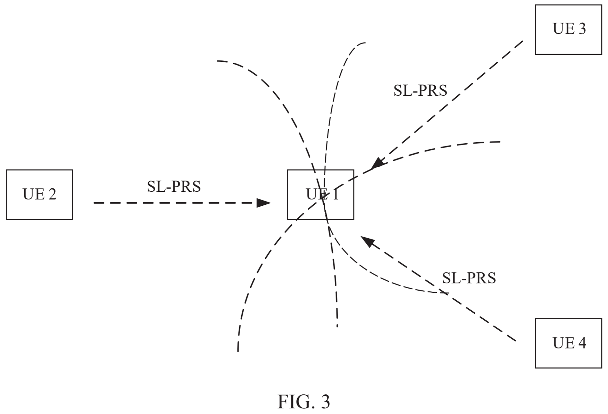

FIG. 3 is a diagram of sidelink-based trilateration according to an embodiment of this application. A location of a target may be estimated by calculating an intersection point of hyperbolas. First, it is assumed that locations of a UE 2, a UE 3, and a UE 4 are known, coordinates of an $i^{th}$ UE are defined as $(x_i, y_i)$, coordinates of a to-be-positioned target are defined as $(x_{UE}, y_{UE})$, and the UE 4 is used as a reference UE. In addition, it is assumed that time of arrival of SL-PRSs that are of the UE 2 and the UE 3 and that are measured by a UE 1 is $t_i$. In this case, a time difference of arrival between any UE and the reference UE is $\Delta t_{i1}$. According to a definition of a hyperbola (a distance between two fixed points is a constant), if the target is located on a hyperbola with two UEs as focuses, the following equations may be enumerated.

$$\sqrt{(x_1 - x_{UE})^2 + (y_1 - y_{UE})^2} - \sqrt{(x_2 - x_{UE})^2 + (y_2 - y_{UE})^2} = c * \Delta t_{21} \,...(1)$$

$$\sqrt{(x_1 - x_{UE})^2 + (y_1 - y_{UE})^2} - \sqrt{(x_3 - x_{UE})^2 + (y_3 - y_{UE})^2} = c * \Delta t_{31} \dots (2)$$

In the foregoing two equations, c is the speed of light, and there are only two unknown numbers ($x_{UE}$, $y_{UE}$). Therefore, location coordinates of a target UE (that is, the UE 1) can be obtained by combining the equation (1) and the equation (2). Actually, due to existence of a measurement error, the foregoing equations usually do not have a closed-form solution, and a classical optimization algorithm like a least square algorithm or a particle swarm filter algorithm is used in engineering to estimate optimal solutions of the foregoing equations.

It may be learned that, the UE 1 (receiver UE) receives and measures the SL-PRS to obtain time information or angle information, and then calculates a distance and a location.

For the receiver UE, the UE needs to buffer the SL-PRS first, and then performs processing, for example, calculates the time of arrival, the angle of arrival, and a phase of arrival. However, different UEs may have different processing capabilities. Some UEs have strong processing capabilities, and therefore required processing time is short, for example, 2 milliseconds. Some UEs have weak processing capabilities, and therefore 10 milliseconds may be required. When the UE processes the buffered SL-PRS signal, the UE likely cannot receive another SL-PRS. This application is to avoid a resource waste caused by another UE sending an unnecessary SL-PRS when the receiver UE processes the SL-PRS.

In a Uu interface positioning technology, a downlink positioning reference signal (downlink positioning reference signal, DL-PRS) is periodically sent, and the receiver UE may determine time at which a base station sends the DL-PRS. However, in a sidelink positioning technology, the SL-PRS is not periodically sent, a transmitter UE needs to perform resource perception first, and then sends the SL-PRS on an unoccupied resource. In other words, the receiver UE cannot determine time at which the transmitter UE or an anchor node sends the SL-PRS, and does not know a specific slot in which the receiver UE receives an SL-PRS sent by another UE. In other words, sending time of an SL-PRS cannot be configured in advance for both the transmitter UE and the receiver UE.

In view of this, this application provides a communication solution. A first terminal reports a processing capability of the first terminal, to avoid a resource waste caused by another terminal sending an unnecessary SL-PRS when the first terminal processes an SL-PRS.

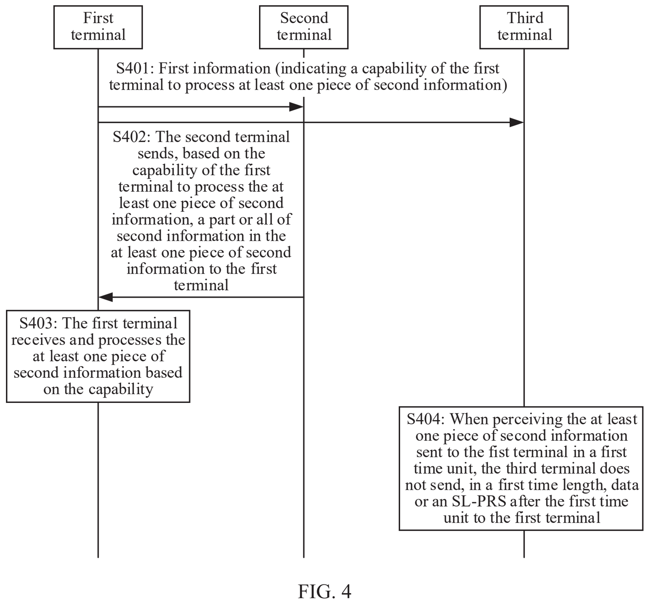

FIG. 4 is a schematic flowchart of a communication method according to an embodiment of this application. For example, the method may include the following steps.

S401: A first terminal sends first information. Correspondingly, a second terminal and a third terminal receive the first information.

In this embodiment, the first terminal may perform sidelink communication with the second terminal and the third terminal.

The second terminal and the third terminal may receive a positioning request of the first terminal or a location management function (location management function, LMF), and send an SL-PRS to the first terminal to position the first terminal. However, after receiving the SL-PRS, the first terminal needs to buffer the SL-PRS, and then performs processing, for example, calculates time of arrival, an angle of arrival, and a phase of arrival, to obtain a positioning measurement result. The second terminal sends, in a time unit (for example, a slot), a part or all of SL-PRSs in at least one SL-PRS to the first terminal, or the second terminal and another terminal send at least one SL-PRS to the first terminal in a same time unit. The first terminal receives the at least one SL-PRS in the time unit, and needs to process the at least one SL-PRS within specific time. The first terminal does not expect to receive, in the time, at least one SL-PRS sent by another terminal (for example, the third terminal). Therefore, the first terminal sends the first information to the second terminal and the third terminal. The first information indicates a capability of the first terminal to process at least one piece of second information. The second information includes the SL-PRS.

For example, a plurality of processing capabilities may be pre-configured or predefined on each terminal, each processing capability has a corresponding index, and the first information may indicate one of indexes.

The first terminal sends the first information, and both the second terminal and the third terminal may receive the first information. In this embodiment, the first terminal, the second terminal, and the third terminal are used as an example for description. Actually, the method may involve more terminals. This is not limited in this application. Another terminal may also receive the first information sent by the first terminal.

For example, in an SL positioning scenario, the first terminal is configured to perform SL positioning with the second terminal, the third terminal, and the like. In this case, the first terminal may send first information to both the second terminal and the third terminal; or may broadcast the first information in a specific range at a specific transmit power, and both the second terminal and the third terminal may receive the first information.

In addition, the first terminal may further send the first information to a location server, a serving base station, a road side service unit (road service unit, RSU), and the like.

For example, the first information may be carried in any one of the following messages: an SLPP message, an RRC message, or an LPP message.

For example, the first information may be referred to as a common sidelink positioning reference signal processing capability across all resource pools (Common SL PRS Processing Capability across all resource pools), or may be another field name. This is not limited in this application. All resource pools include a shared resource pool, a resource pool for positioning, and the like.

S402: The second terminal sends, based on the capability of the first terminal to process the at least one piece of second information, a part or all of second information in the at least one piece of second information to the first terminal.

After receiving the first information sent by the first terminal, the second terminal sends, based on the capability of the first terminal to process the at least one piece of second information, the part or all of second information in the at least one piece of second information to the first terminal.

For example, when perceiving that the first terminal has not received the at least one piece of second information in a first time unit, the second terminal may send, in the first time unit, the part or all of second information in the at least one piece of second information to the first terminal. The first time unit may be one slot, one subframe, or one orthogonal frequency division multiplexing symbol.

It may be understood that, the second terminal may send one piece of second information to the first terminal, or may send a plurality of pieces of second information to the first terminal. In the first time unit, another terminal may also send at least one piece of second information to the first terminal.

S403: The first terminal receives and processes the at least one piece of second information based on the capability.

When the first terminal receives the at least one piece of second information at the moment, the first terminal processes the at least one piece of second information based on the capability of the first terminal, including buffering the at least one piece of second information and performing positioning measurement on the at least one SL-PRS.

S404: When perceiving the at least one piece of second information sent to the first terminal in the first time unit, the third terminal does not send, in the first time length, data or an SL-PRS after the first time unit to the first terminal.

In sidelink communication, terminals perform communication by using resources in a same resource pool, and the terminals perform resource perception before using a channel. Therefore, when another terminal (for example, the second terminal) sends the at least one piece of second information to the first terminal, the third terminal may perceive the at least one piece of second information sent to the first terminal in the first time unit. The third terminal has learned of the capability of the first terminal to process the at least one piece of second information, and the first terminal needs to process, in the first time length, the at least one piece of second information received in the first time unit. Therefore, the third terminal does not send, in the first time length, the data or the SL-PRS after the first time unit to the first terminal, to avoid a resource waste.

According to the communication method provided in this embodiment of this application, the first terminal reports the processing capability of the first terminal, to avoid a resource waste caused by another terminal sending an unnecessary SL-PRS when the first terminal processes the SL-PRS.

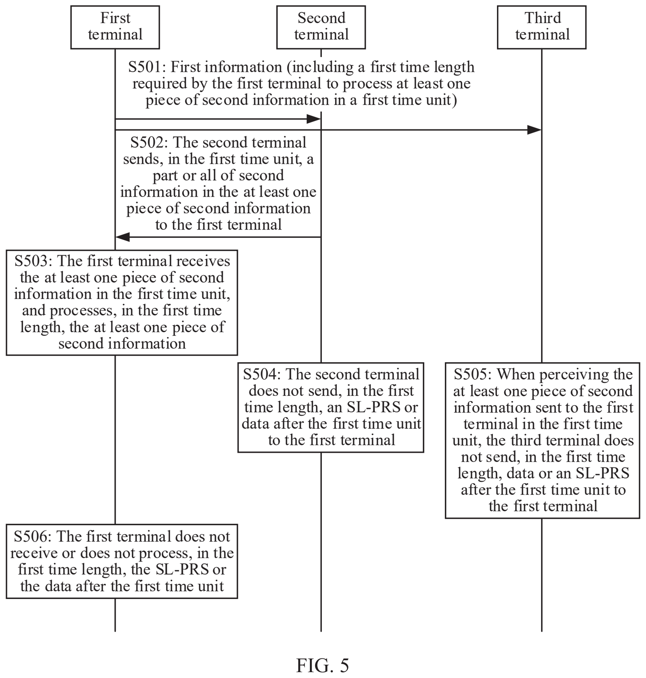

The capability of the first terminal to process the at least one piece of second information may be represented in a plurality of manners. The following describes the capability by using an example of the embodiment shown in FIG. 5.

FIG. 5 is a schematic flowchart of another communication method according to an embodiment of this application. For example, the method may include the following steps.

S501: A first terminal sends first information. Correspondingly, a second terminal and a third terminal receive the first information.

In this embodiment, the first terminal may perform sidelink communication with the second terminal and the third terminal.

The second terminal and the third terminal may receive a positioning request of the first terminal or an LMF, and send an SL-PRS to the first terminal to position the first terminal. However, after receiving the SL-PRS, the first terminal needs to buffer the SL-PRS, and then perform processing, for example, calculate time of arrival, an angle of arrival, and a phase of arrival, to obtain a positioning measurement result. The second terminal sends, in a first time unit, a part or all of SL-PRSs in at least one SL-PRS to the first terminal, or the second terminal and another terminal send at least one SL-PRS to the first terminal in a same first time unit. The first terminal receives the at least one SL-PRS in the first time unit, and needs to process the at least one SL-PRS within specific time. The first terminal does not expect that the first terminal receives, in the time, at least one SL-PRS sent by another terminal (for example, the third terminal). Therefore, the first terminal sends the first information to the second terminal and the third terminal. The first information includes a first time length required by the first terminal to process the at least one piece of second information in the first time unit. The second information includes the SL-PRS.

A unit of the first time unit includes any one of the following: a slot, a subframe, and an orthogonal frequency division multiplexing symbol.

The first time unit includes any one of the following: a slot, a subframe, and an orthogonal frequency division multiplexing symbol. For example, the first time unit may be one slot, one subframe, or one orthogonal frequency division multiplexing symbol; or may be a fixed time unit, for example, X slots, X subframes, or X orthogonal frequency division multiplexing symbols.

For example, a candidate value of the first time length required by the first terminal to process the at least one piece of second information in one slot may be in {0, 1, 2, 3, ..., 31}.

The first time length may include the first time unit, or may be after the first time unit, that is, does not include the first time unit.

In addition, in a sidelink positioning technology, each SL-PRS is associated with one PSCCH. Therefore, when the first terminal receives the at least one piece of second information in the first time unit, the second information may further include at least one PSCCH, and the at least one PSCCH respectively indicates whether at least one SL-PRS exists in the first time unit.

Further, the first information may further include at least one of the following: a maximum bandwidth that is of an SL-PRS and that is supported by the first terminal, and a maximum quantity of pieces of second information that are capable of being processed by the first terminal and that are in the first time unit.

The maximum bandwidth that is of the SL-PRS and that is supported by the first terminal is a maximum bandwidth that is of a single SL-PRS and that is allowed by the first terminal. The maximum bandwidth that is of the SL-PRS and that is supported by the first terminal affects a processing capability of the first terminal. A larger maximum bandwidth that is of the SL-PRS and that is supported by the first terminal indicates a longer processing time length required by the first terminal. For example, for a frequency band with a frequency range (frequency range, FR) 1, a value range of the maximum bandwidth may be {5, 10, 20, 40, 50, 80, 100}. For a frequency band with a FR 2, the value range of the maximum bandwidth may be {50, 100, 200, 400}. The FR 1 and the FR 2 have different subcarrier spacings.

The maximum quantity of pieces of second information that are capable of being processed by the first terminal and that are in the first time unit also affects the processing capability of the first terminal. A larger maximum quantity of second information that are capable of being processed by the first terminal and that are in the first time unit indicates a longer processing time length required by the first terminal. For example, for the frequency band with the FR 1, a candidate value of the maximum quantity may be in {1, 2, 4, 6, 8, 12, 16, 24}. For the frequency band with the FR 2, the candidate value of the maximum quantity may be in {1, 2, 4, 6, 8, 12, 16, 24}. The at least one piece of second information may be sent by a terminal by using some resources in all resource pools such as a shared resource pool and a resource pool for positioning.

The first terminal sends the first information, and both the second terminal and the third terminal may receive the first information. In this embodiment, the first terminal, the second terminal, and the third terminal are used as an example for description. Actually, the method may involve more terminals. This is not limited in this application. Another terminal may also receive the first information sent by the first terminal.

For example, the first information may be carried in any one of the following messages: an SLPP message, an RRC message, or an LPP message.

S502: The second terminal sends, in the first time unit, a part or all of second information in the at least one piece of second information to the first terminal.

After receiving the first information sent by the first terminal, the second terminal sends, based on the capability of the first terminal to process the at least one piece of second information, the part or all of second information in the at least one piece of second information to the first terminal.

For example, when perceiving that the first terminal has not received the at least one piece of second information in the first time unit, the second terminal may send, in the first time unit, the part or all of second information in the at least one piece of second information to the first terminal.

It may be understood that, the second terminal may send one piece of second information to the first terminal, or may send a plurality of pieces of second information to the first terminal. In the first time unit, another terminal may also send at least one piece of second information to the first terminal.

S503: The first terminal receives the at least one piece of second information in the first time unit, and processes the at least one piece of second information in the first time length.

For example, the first terminal receives the at least one S-PRS and the PSCCH corresponding to each S-PRS in the first time unit, and the first terminal needs to first buffer the at least one PSCCH and the at least one SL-PRS in the first time length, parses the at least one PSCCH to know about whether the at least one SL-PRS exists in the first time unit, and then measures the at least one SL-PRS in the first time length to obtain a positioning measurement result.

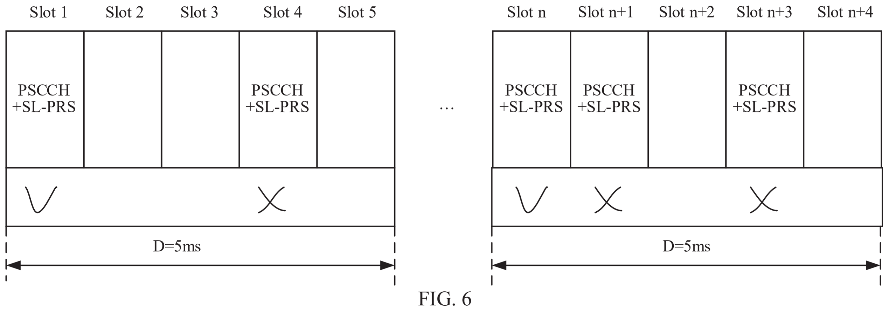

FIG. 6 is a diagram of an example of a processing capability of a first terminal according to an embodiment of this application. The first terminal receives at least one PSCCH and at least one SL-PRS in a slot 1, and needs to buffer and process the at least one PSCCH and the at least one SL-PRS in 5 ms.

S504: The second terminal does not send, in the first time length, an SL-PRS or data after the first time unit to the first terminal.

The second terminal has sent, in the first time unit, the part or all of second information in the at least one piece of second information to the first terminal, and the second terminal has learned that the first terminal needs to process, in the first time length, the at least one piece of second information received in the first time unit. Therefore, the second terminal does not send, in the first time length, the SL-PRS or the data after the first time unit to the first terminal, to avoid a resource waste.

S505: When perceiving the at least one piece of second information sent to the first terminal in the first time unit, the third terminal does not send, in the first time length, data or an SL-PRS after the first time unit to the first terminal.

In sidelink communication, terminals perform communication by using resources in a same resource pool, and the terminals perform resource perception before using a channel. Therefore, when another terminal (for example, the second terminal) sends the at least one piece of second information to the first terminal, the third terminal may perceive the at least one piece of second information sent to the first terminal in the first time unit. The third terminal has learned that the first terminal needs to process, in the first time length, the at least one piece of second information received in the first time unit. Therefore, the third terminal does not send, in the first time length, the data or the SL-PRS after the first time unit to the first terminal, to avoid a resource waste.

S506: The first terminal does not receive or does not process, in the first time length, the SL-PRS or the data after the first time unit.

As shown in FIG. 6, if the first terminal receives the at least one PSCCH and the at least one SL-PRS in the slot 1, the first terminal does not receive at least one PSCCH and at least one SL-PRS in 5 ms including the slot 1 (certainly, 5 ms may not include the slot 1). For example, the first terminal does not receive at least one PSCCH and at least one SL-PRS that are sent in a slot 4.

After 5 ms, the first terminal may continue to receive at least one PSCCH and at least one SL-PRS in, for example, a slot n, and process, in another 5 ms, the at least one PSCCH and the at least one SL-PRS that are received in the slot n.

According to the communication method provided in this embodiment of this application, the first terminal reports the processing capability of the first terminal, to avoid a resource waste caused by another terminal sending an unnecessary SL-PRS when the first terminal processes the SL-PRS.

The foregoing embodiment is described by using an example in which the first terminal can only receive and process at least one piece of second information received in one first time unit at a time. Actually, as the processing capability of the terminal is improved, the first terminal may support a plurality of parallel processes, and may simultaneously process, in the plurality of processes, at least one piece of second information received in a plurality of first time units. The following provides detailed descriptions.

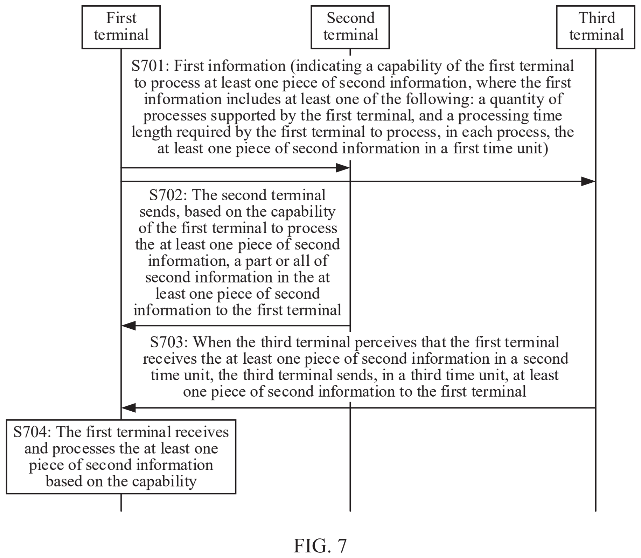

FIG. 7 is a schematic flowchart of still another communication method according to an embodiment of this application. For example, the method may include the following steps.

S701: A first terminal sends first information. Correspondingly, a second terminal and a third terminal receive the first information.

Different from embodiments shown in FIG. 4 and FIG. 5, in this embodiment, the first terminal may support a plurality of parallel processes, and may simultaneously process, in the plurality of processes, at least one piece of second information received in a plurality of first time units.

The first terminal sends the first information. The first information indicates a capability of the first terminal to process the at least one piece of second information. The first information includes at least one of the following: a quantity of processes supported by the first terminal, and a processing time length required by the first terminal to process, in each process, the at least one piece of second information in the first time unit. For example, processing time lengths corresponding to different processes may be the same or different.

In addition, the first terminal may further send the first information to a location server, a serving base station, an RSU, and the like.

For example, the first information may be carried in any one of the following messages: an SLPP message, an RRC message, or an LPP message.

For a further implementation of this step, refer to step S401 in the embodiment shown in FIG. 4 or step S501 in the embodiment shown in FIG. 5. Details are not described herein again.

S702: The second terminal sends, based on the capability of the first terminal to process the at least one piece of second information, a part or all of second information in the at least one piece of second information to the first terminal.

The second terminal learns of the quantity of processes supported by the first terminal, to learn of the capability of the first terminal to process the information; and sends the part or all of second information in the at least one piece of second information to the first terminal based on the capability, thereby improving transmission efficiency.

For example, when perceiving that the first terminal has not received the at least one piece of second information in a second time unit, the second terminal may send, in the second time unit, the part or all of second information in the at least one piece of second information to the first terminal. A time length of the second time unit may be a time length of the foregoing first time unit. For example, the second time unit may be one slot, one subframe, or one orthogonal frequency division multiplexing symbol.

It may be understood that, the second terminal may send one piece of second information to the first terminal, or may send a plurality of pieces of second information to the first terminal. In the second time unit, another terminal may also send at least one piece of second information to the first terminal.

S703: When perceiving that the first terminal receives the at least one piece of second information in the second time unit, the third terminal sends, in a third time unit, at least one piece of second information to the first terminal.

The third terminal learns of the quantity of processes supported by the first terminal, and perceives that the first terminal receives the at least one piece of second information in the second time unit. The first terminal needs to process, in a part of processes, the at least one piece of second information received in the second time unit. The third terminal may further send, in the third time unit, the at least one piece of second information to the first terminal, to cause the first terminal to process, in another remaining process, the at least one piece of second information received in the third time unit, thereby improving transmission efficiency and information processing efficiency.

For example, the third time unit is after the second time unit and is in the first time length. Generally, the first terminal simultaneously processes, in a plurality of processes, the at least one piece of second information in one first time length.

S704: The first terminal receives and processes the at least one piece of second information based on the capability.

Based on the capability of simultaneously processing, the first terminal receives and processes, in one process, the at least one piece of second information in the second time unit, and receives and processes, in another process, the at least one piece of second information in the third time unit.

Further, the first terminal may further support more than two processes, and may process, in each process, at least one piece of second information in a time unit.

The first terminal may simultaneously process the received information in at least two processes, thereby improving information processing efficiency.

According to the communication method provided in this embodiment of this application, the first terminal notifies another terminal of the capability of the first terminal to process the information by reporting the quantity of processes supported by the first terminal, so that information processing efficiency may be improved while avoiding a resource waste.

The following describes by using an example in which the first terminal supports two processes.

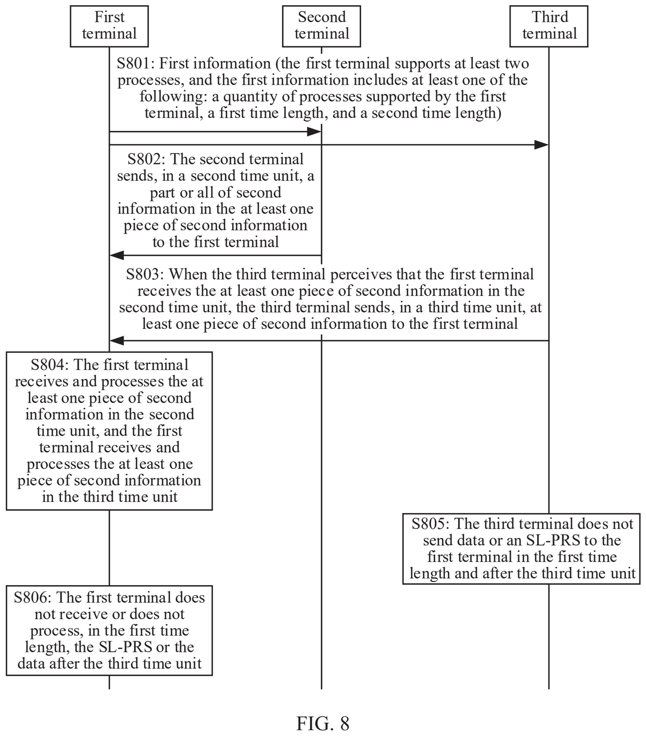

FIG. 8 is a schematic flowchart of still another communication method according to an embodiment of this application. For example, the method may include the following steps.

S801: A first terminal sends first information. Correspondingly, a second terminal and a third terminal receive the first information.

The first information indicates a capability of the first terminal to process at least one piece of second information. Specifically, the first information includes at least one of the following: a quantity of processes supported by the first terminal, a first time length, and a second time length. The first terminal supports at least two processes. The first time length is a processing time length required by the first terminal to process, in a first process, at least one piece of second information in a second time unit, and the second time length is a processing time length required by the first terminal to process, in a second process, at least one piece of second information in a third time unit. For example, the first time length and the second time length may be the same or different.

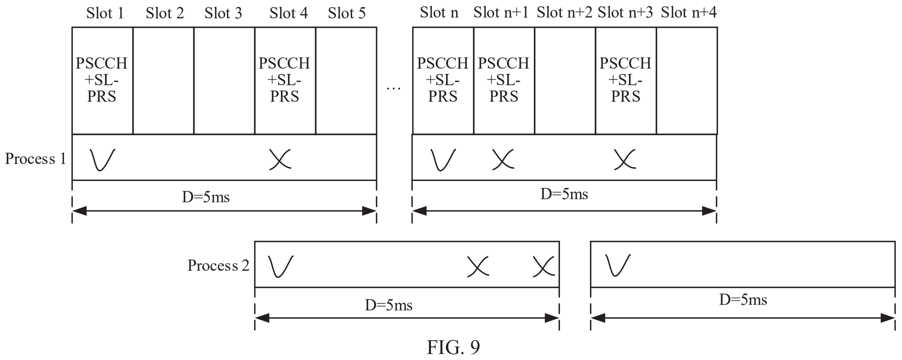

FIG. 9 is a diagram of an example in which a terminal processes an SL-PRS in a plurality of processes according to an embodiment of this application. FIG. 9 shows an example in which the first terminal supports a process 1 and a process 2. A processing time length (that is, the first time length) corresponding to the process 1 is 5 ms, and a processing time length (that is, the second time length) corresponding to the process 2 is also 5 ms.

For a further implementation of this step, refer to step S401 in the embodiment shown in FIG. 4, step S501 in the embodiment shown in FIG. 5, or step S701 in the embodiment shown in FIG. 7. Details are not described herein again.

S802: The second terminal sends, in the second time unit, a part or all of second information in the at least one piece of second information to the first terminal.

The second terminal learns of the quantity of processes supported by the first terminal, to learn of the capability of the first terminal to process the information; and sends the part or all of second information in the at least one piece of second information to the first terminal based on the capability, thereby improving transmission efficiency.

For example, when perceiving that the first terminal has not received the at least one piece of second information in the second time unit, the second terminal may send, in the second time unit, the part or all of second information in the at least one piece of second information to the first terminal. A time length of the second time unit may be a time length of the foregoing first time unit. For example, the second time unit may be one slot, one subframe, or one orthogonal frequency division multiplexing symbol.

It may be understood that, the second terminal may send one piece of second information to the first terminal, or may send a plurality of pieces of second information to the first terminal. In the second time unit, another terminal may also send at least one piece of second information to the first terminal.

S803: When perceiving that the first terminal receives the at least one piece of second information in the second time unit, the third terminal sends, in the third time unit, at least one piece of second information to the first terminal.

The third terminal learns of the quantity of processes supported by the first terminal, and perceives that the first terminal receives the at least one piece of second information in the second time unit. The first terminal needs to process, in the first process, the at least one piece of second information received in the second time unit. The third terminal may further send, in the third time unit, the at least one piece of second information to the first terminal, to cause the first terminal to process, in the second process, the at least one piece of second information received in the third time unit, thereby improving transmission efficiency and information processing efficiency.

For example, the third time unit is after the second time unit and is in the first time length. Generally, the first terminal simultaneously processes, in a plurality of processes, the at least one piece of second information in one first time length.

Still refer to FIG. 9. The third terminal perceives that the second terminal sends at least one PSCCH and at least one SL-PRS to the first terminal in a slot 1, and the first terminal needs to process, in one of processes (for example, the process 1), the at least one PSCCH and the at least one SL-PRS in the slot 1. However, the third terminal learns that the first terminal supports two processes. In this case, the third terminal may send at least one PSCCH and at least one SL-PRS to the first terminal in any one slot of a slot 2 to a slot 5 (the slot 4 is used as an example in FIG. 9).

S804: The first terminal receives and processes the at least one piece of second information in the second time unit, and the first terminal receives and processes the at least one piece of second information in the third time unit.

Still refer to FIG. 9. After receiving the at least one PSCCH and the at least one SL-PRS in the slot 1, the first terminal may process the at least one PSCCH and the at least one SL-PRS in the process 1; and after receiving the at least one PSCCH and the at least one SL-PRS in the slot 4, the first terminal may process the at least one PSCCH and the at least one SL-PRS in the process 2.

In this example, duration for processing, in the process 1, the at least one PSCCH and the at least one SL-PRS in the slot 1 is 5 ms, and duration for processing, in the process 2, the at least one PSCCH and the at least one SL-PRS in the slot 4 is also 5 ms.

S805: The third terminal does not send data or an SL-PRS to the first terminal in the first time length after the third time unit.

The third terminal perceives that the first terminal has used its supported maximum quantity of processes to simultaneously process the received information, and the first terminal cannot receive another SL-PRS or data. Therefore, the third terminal does not send the data or the SL-PRS to the first terminal in the first time length after the third time unit, to avoid a resource waste.

In addition, the second terminal also perceives that the first terminal has used its supported maximum quantity of processes to simultaneously process the received information, and the first terminal cannot receive another SL-PRS or data. Therefore, the second terminal does not send the data or the SL-PRS to the first terminal in the first time length after the third time unit, to avoid a resource waste.

S806: The first terminal does not receive or does not process, in the first time length, the SL-PRS or the data after the third time unit.

The first terminal has used its supported maximum quantity of processes to simultaneously process the received information, and the first terminal cannot receive another SL-PRS or data. Therefore, the first terminal does not receive or does not process, in the first time length, the SL-PRS or the data after the third time unit, to improve information processing accuracy.

In addition, at least one piece of second information in one first time unit is processed in each process. Therefore, the first terminal does not process, in the process, at least one piece of second information in another time unit. As shown in FIG. 9, the first terminal receives the at least one PSSCH and the at least one SL-PRS in the slot 4, and the first terminal does not process, in the process 1, the at least one PSSCH and the at least one SL-PRS in the slot 4, but processes, in the process 2, the at least one PSSCH and the at least one SL-PRS in the slot 4.

At least one piece of second information received in a time unit is independently processed in each process. As shown in FIG. 9, the processing of the at least one PSSCH and the at least one SL-PRS in the slot 1 is completed in the process 1 in 5 ms. Even if the processing of the at least one PSSCH and the at least one SL-PRS in the slot 4 has not completed in the process 2 in 5 ms, the first terminal may still continue to process, in the process 1, at least one PSSCH and at least one SL-PRS that are received in a slot n.

According to the communication method provided in this embodiment of this application, the first terminal notifies another terminal of the capability of the first terminal to process the information by reporting the quantity of processes supported by the first terminal, so that information processing efficiency may be improved while avoiding a resource waste.

It may be understood that, to implement the functions in the foregoing embodiments, the foregoing terminals include corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraints of the technical solutions.

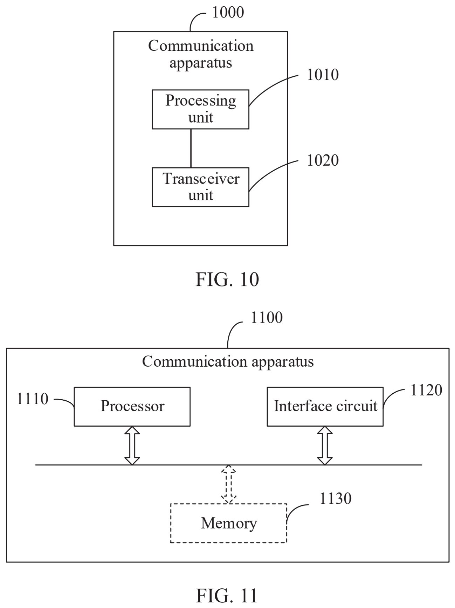

FIG. 10 and FIG. 11 each are a diagram of a possible structure of a communication apparatus according to an embodiment of this application. The communication apparatuses may be configured to implement functions of the terminals in the foregoing method embodiments. Therefore, beneficial effects of the foregoing method embodiments can also be implemented. In this embodiment of this application, the communication apparatus may be one of the terminals 120a to 120j shown in FIG. 1, or may be a module (for example, a chip) used in the terminal.

As shown in FIG. 10, a communication apparatus 1000 includes a processing unit 1010 and a transceiver unit 1020. The communication apparatus 1000 is configured to implement a function of the first terminal, the second terminal, or the third terminal in the method embodiment shown in FIG. 4, FIG. 5, FIG. 7, or FIG. 8.

When the communication apparatus 1000 is configured to implement the function of the first terminal in the method embodiment shown in FIG. 4, the processing unit 1010 is configured to perform step S403 in the embodiment shown in FIG. 4, and the transceiver unit 1020 is configured to perform operations performed by the first terminal in steps S401 and S402 in the embodiment shown in FIG. 4. Alternatively, when the communication apparatus 1000 is configured to implement the function of the first terminal in the method embodiment shown in FIG. 5, the processing unit 1010 is configured to perform steps S503 and S506 in the embodiment shown in FIG. 5, and the transceiver unit 1020 is configured to perform operations performed by the first terminal in steps S501 and S502 in the embodiment shown in FIG. 5. Alternatively, when the communication apparatus 1000 is configured to implement the function of the first terminal in the method embodiment shown in FIG. 7, the processing unit 1010 is configured to perform step S704 in the embodiment shown in FIG. 7, and the transceiver unit 1020 is configured to perform operations performed by the first terminal in steps S701 to S703 in the embodiment shown in FIG. 7. Alternatively, when the communication apparatus 1000 is configured to implement the function of the first terminal in the method embodiment shown in FIG. 8, the processing unit 1010 is configured to perform steps S804 and S806 in the embodiment shown in FIG. 8, and the transceiver unit 1020 is configured to perform operations performed by the first terminal in steps S801 to S803 in the embodiment shown in FIG. 4.

When the communication apparatus 1000 is configured to implement the function of the second terminal in the method embodiment shown in FIG. 4, the transceiver unit 1020 is configured to perform operations performed by the second terminal in steps S401 and S402 in the embodiment shown in FIG. 4. Alternatively, when the communication apparatus 1000 is configured to implement the function of the second terminal in the method embodiment shown in FIG. 5, the processing unit 1010 is configured to perform step S504 in the embodiment shown in FIG. 5, and the transceiver unit 1020 is configured to perform operations performed by the second terminal in steps S501 and S502 in the embodiment shown in FIG. 5. Alternatively, when the communication apparatus 1000 is configured to implement the function of the second terminal in the method embodiment shown in FIG. 7, the transceiver unit 1020 is configured to perform operations performed by the second terminal in steps S701 and S702 in the embodiment shown in FIG. 7. Alternatively, when the communication apparatus 1000 is configured to implement the function of the second terminal in the method embodiment shown in FIG. 8, the transceiver unit 1020 is configured to perform operations performed by the second terminal in steps S801 and S802 in the embodiment shown in FIG. 8.

When the communication apparatus 1000 is configured to implement the function of the third terminal in the method embodiment shown in FIG. 4, the processing unit 1010 is configured to perform step S404 in the embodiment shown in FIG. 4, and the transceiver unit 1020 is configured to perform an operation performed by the third terminal in step S401 in the embodiment shown in FIG. 4. Alternatively, when the communication apparatus 1000 is configured to implement the function of the third terminal in the method embodiment shown in FIG. 5, the processing unit 1010 is configured to perform step S505 in the embodiment shown in FIG. 5, and the transceiver unit 1020 is configured to perform an operation performed by the third terminal in step S501 in the embodiment shown in FIG. 5. Alternatively, when the communication apparatus 1000 is configured to implement the function of the third terminal in the method embodiment shown in FIG. 7, the transceiver unit 1020 is configured to perform operations performed by the third terminal in steps S701 and S703 in the embodiment shown in FIG. 7. Alternatively, when the communication apparatus 1000 is configured to implement the function of the third terminal in the method embodiment shown in FIG. 8, the processing unit 1010 is configured to perform step S805 in the embodiment shown in FIG. 8, and the transceiver unit 1020 is configured to perform operations performed by the third terminal in steps S801 and S803 in the embodiment shown in FIG. 8.

For more detailed descriptions about the foregoing processing unit 1010 and the transceiver unit 1020, directly refer to the related descriptions in the method embodiments shown in FIG. 4, FIG. 5, FIG. 7, and FIG. 8. Details are not described herein again.

As shown in FIG. 11, a communication apparatus 1100 includes a processor 1110 and an interface circuit 1120. The processor 1110 and the interface circuit 1120 are coupled to each other. It may be understood that, the interface circuit 1120 may be a transceiver or an input/output interface. Optionally, the communication apparatus 1100 may further include a memory 1130 configured to store instructions to be executed by the processor 1110, store input data required by the processor 1110 to run the instructions, or store data generated after the processor 1110 runs the instructions.

When the communication apparatus 1100 is configured to implement the method shown in FIG. 5, the processor 1110 is configured to implement a function of the foregoing processing unit 1010, and the interface circuit 1120 is configured to implement a function of the foregoing transceiver unit 1020.

When the foregoing communication apparatus is a chip used in a first terminal, the chip in the first terminal implements the function of the first terminal in the method embodiments. The chip in the first terminal receives information from another module (for example, a radio frequency module or an antenna) in the first terminal, where the information is sent by a second terminal or a third terminal to the first terminal. Alternatively, the chip in the first terminal sends information to another module (for example, the radio frequency module or the antenna) in the first terminal, where the information is sent by the first terminal to the second terminal or the third terminal.

When the foregoing communication apparatus is a chip used in a second terminal, the chip in the second terminal implements the function of the second terminal in the method embodiments. The chip in the second terminal receives information from another module (for example, a radio frequency module or an antenna) in the second terminal, where the information is sent by a first terminal to the second terminal. Alternatively, the chip in the second terminal sends information to another module (for example, the radio frequency module or the antenna) in the second terminal, where the information is sent by the second terminal to the first terminal.

When the foregoing communication apparatus is a chip used in a third terminal, the chip in the third terminal implements the function of the third terminal in the method embodiments. The chip in the third terminal receives information from another module (for example, a radio frequency module or an antenna) in the third terminal, where the information is sent by a first terminal to the third terminal. Alternatively, the chip in the third terminal sends information to another module (for example, the radio frequency module or the antenna) in the third terminal, where the information is sent by the third terminal to the first terminal.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, any regular processor, or the like.

An embodiment of this application further provides a communication system. The communication system includes the foregoing first terminal, second terminal, and third terminal.

An embodiment of this application further provides a computer-readable storage medium. The computer-readable storage medium stores a computer program or instructions. When the computer program or the instructions are executed, the method in the foregoing method embodiments is implemented.

An embodiment of this application further provides a computer program product including instructions. When the instructions are run on the foregoing communication apparatus, the communication apparatus is caused to perform the method in the foregoing method embodiments.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk, a compact disc read-only memory (compact disc read-only memory, CD-ROM), or any other form of storage medium well-known in the art. For example, a storage medium is coupled to the processor, so that the processor can read information from the storage medium and write information into the storage medium. Certainly, the storage medium may be a component of the processor. The processor and the storage medium may be disposed in an ASIC. In addition, the ASIC may be located in the network device or the terminal. Certainly, the processor and the storage medium may exist in the network device or the terminal as discrete components.

All or a part of the foregoing embodiments may be implemented by using software, hardware, firmware, or any combination thereof. When software is used to implement embodiments, all or a part of embodiments may be implemented in a form of a computer program product. The computer program product includes one or more computer programs or instructions. When the computer programs or the instructions are loaded and executed on a computer, procedures or functions in embodiments of this application are all or partially executed. The computer may be a general-purpose computer, a dedicated computer, a computer network, a network device, a user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk drive, or a magnetic tape; or may be an optical medium, for example, a digital video disc; or may be a semiconductor medium, for example, a solid-state drive.

In various embodiments of this application, unless otherwise stated or if there is a logic conflict, terms and/or descriptions in different embodiments are consistent and may be mutually referenced, and technical features in different embodiments may be combined into a new embodiment based on an internal logical relationship thereof.

In this application, "at least one" means one or more, and "a plurality of" means two or more. "At least one of the following: ..." or a similar expression represents any one of listed items or any quantity of combinations of these items. For example, "at least one of the following: A, B, and C" or "at least one of the following: A, B, or C" each may indicate that only A exists, only B exists, only C exists, both A and B exist, both B and C exist, both A and C exist, or A, B, and C all exist, where A, B, and C may be singular or plural. "And/or" describes an association relationship between associated objects, and indicates that three relationships may exist. For example, A and/or B may indicate the following three cases: Only A exists, both A and B exist, and only B exists, where A and B may be in a singular form or a plural form. In the text descriptions of this application, the character "/" represents an "or" relationship between the associated objects. In a formula in this application, the character "/" represents a "division" relationship between the associated objects.

It may be understood that, various numbers in embodiments of this application are merely for differentiation for ease of description, and are not used to limit the scope of embodiments of this application. Sequence numbers of the foregoing processes do not mean an execution sequence, and the execution sequence of the processes should be determined based on functions and internal logic of the processes.

**Claims**

1. A communication method, wherein the method comprises:

   sending, by a first terminal, first information, wherein the first information indicates a capability of the first terminal to process at least one piece of second information, and the second information comprises a sidelink positioning reference signal SL-PRS; and
   receiving and processing, by the first terminal, the at least one piece of second information based on the capability.

2. The method according to claim 1, wherein the first information comprises a first time length required by the first terminal to process the at least one piece of second information in a first time unit.

3. The method according to claim 2, wherein the receiving and processing, by the first terminal, the at least one piece of second information based on the capability comprises:
   receiving, by the first terminal, the at least one piece of second information in the first time unit, and processing the at least one piece of second information in the first time length.

4. The method according to claim 3, wherein the method further comprises: not receiving or not processing, by the first terminal in the first time length, an SL-PRS or data after the first time unit.

5. The method according to claim 3 or 4, wherein the first time unit comprises any one of the following: a slot, a subframe, and an orthogonal frequency division multiplexing symbol.

6. The method according to any one of claims 2 to 5, wherein the first information further comprises at least one of the following: a maximum bandwidth that is of an SL-PRS and that is supported by the first terminal, and a maximum quantity of pieces of second information that are capable of being processed by the first terminal and that are in the first time unit.

7. The method according to any one of claims 2 to 6, wherein the second information further comprises at least one physical sidelink control channel PSCCH, and the at least one PSCCH respectively indicates whether at least one SL-PRS exists in the first time unit.

8. The method according to any one of claims 1 to 7, wherein the first information is carried in any one of the following messages: a sidelink long term evolution positioning protocol SLPP message, a radio resource control RRC message, and a long term evolution positioning protocol LPP message.

9. A communication method, wherein the method comprises:

   receiving, by a second terminal, first information from a first terminal, wherein the first information indicates a capability of the first terminal to process at least one piece of second information, and the second information comprises a sidelink positioning reference signal SL-PRS; and
   sending, by the second terminal based on the capability of the first terminal to process the at least one piece of second information, a part or all of second information in the at least one piece of second information to the first terminal.

10. The method according to claim 9, wherein the first information comprises a first time length required by the first terminal to process the at least one piece of second information in a first time unit.

11. The method according to claim 10, wherein the sending, by the second terminal based on the capability of the first terminal to process the at least one piece of second information, the part or all of second information in the at least one piece of second information to the first terminal comprises:
sending, by the second terminal in the first time unit, the part or all of second information in the at least one piece of second information to the first terminal.

12. The method according to claim 11, wherein the method further comprises: not sending, by the second terminal in the first time length, an SL-PRS or data after the first time unit to the first terminal.

13. The method according to any one of claims 10 to 12, wherein the first time unit comprises any one of the following: a slot, a subframe, and an orthogonal frequency division multiplexing symbol.

14. The method according to any one of claims 10 to 13, wherein the first information further comprises at least one of the following: a maximum bandwidth that is of an SL-PRS and that is supported by the first terminal, and a maximum quantity of pieces of second information that are capable of being processed by the first terminal and that are in the first time unit.

15. The method according to any one of claims 10 to 14, wherein the second information further comprises at least one physical sidelink control channel PSCCH, and the at least one PSCCH respectively indicates whether at least one SL-PRS exists in the first time unit.

16. The method according to any one of claims 9 to 15, wherein the first information is carried in any one of the following messages: a sidelink long term evolution positioning protocol SLPP message, a radio resource control RRC message, and a long term evolution positioning protocol LPP message.

17. A communication method, wherein the method comprises:

sending, by a first terminal, first information, wherein the first information indicates a capability of the first terminal to process at least one piece of second information, the first information comprises at least one of the following: a quantity of processes supported by the first terminal, and a processing time length required by the first terminal to process, in each process, the at least one piece of second information in a first time unit, and the second information comprises a sidelink positioning reference signal SL-PRS; and
receiving and processing, by the first terminal, the at least one piece of second information based on the capability.

18. The method according to claim 17, wherein the first terminal supports at least two processes, wherein a processing time length corresponding to a first process is a first time length, and a processing time length corresponding to a second process is a second time length; and
the receiving and processing, by the first terminal, the at least one piece of second information based on the capability comprises:

receiving and processing, by the first terminal, the at least one piece of second information in a second time unit, wherein a time length of the second time unit is a time length of the first time unit; and
receiving and processing, by the first terminal, the at least one piece of second information in a third time unit, wherein a time length of the third time unit is the time length of the first time unit, wherein
the third time unit is after the second time unit and is in the first time length.

19. The method according to claim 18, wherein the method further comprises: not receiving or not processing, by the first terminal in the first time length, an SL-PRS or data after the third time unit.

20. The method according to any one of claims 17 to 19, wherein the first information further comprises at least one of the following: a maximum bandwidth that is of an SL-PRS and that is supported by the first terminal, and a maximum quantity of pieces of second information that are capable of being processed by the first terminal and that are in the first time unit.

21. The method according to any one of claims 17 to 20, wherein the second information further comprises at least one physical sidelink control channel PSCCH, and the at least one PSCCH respectively indicates whether at least one SL-PRS exists in the first time unit.

22. The method according to any one of claims 17 to 21, wherein the first information is carried in any one of the following messages: a sidelink long term evolution positioning protocol SLPP message, a radio resource control RRC message, and a long term evolution positioning protocol LPP message.

23. The method according to any one of claims 17 to 22, wherein the first time unit comprises any one of the following: a slot, a subframe, and an orthogonal frequency division multiplexing symbol.

24. A communication method, wherein the method comprises:

receiving, by a second terminal, first information from a first terminal, wherein the first information indicates a capability of the first terminal to process at least one piece of second information, the first information comprises at least one of the following: a quantity of processes supported by the first terminal, and a processing time length required by the first terminal to process, in each process, the at least one piece of second information in a first time unit, and the second information comprises a sidelink positioning reference signal SL-PRS; and
sending, by the second terminal based on the capability of the first terminal to process the at least one piece of second information, a part or all of second information in the at least one piece of second information to the first terminal.

25. The method according to claim 24, wherein the first terminal supports at least two processes, wherein a processing time length corresponding to a first process is a first time length, and a processing time length corresponding to a second process is a second time length; and
the sending, by the second terminal based on the capability of the first terminal to process the at least one piece of second information, the part or all of second information in the at least one piece of second information to the first terminal comprises:
sending, by the second terminal in the first time unit, the part or all of second information in the at least one piece of second information to the first terminal.

26. The method according to claim 25, wherein the first information further comprises at least one of the following: a maximum bandwidth that is of an SL-PRS and that is supported by the first terminal, and a maximum quantity of pieces of second information that are capable of being processed by the first terminal and that are in the first time unit.

27. The method according to any one of claims 24 to 26, wherein the second information further comprises at least one physical sidelink control channel PSCCH, and the at least one PSCCH respectively indicates whether at least one SL-PRS exists in the first time unit.

28. The method according to any one of claims 24 to 27, wherein the first information is carried in any one of the following messages: a sidelink long term evolution positioning protocol SLPP message, a radio resource control RRC message, and a long term evolution positioning protocol LPP message.

29. A communication apparatus, comprising a module or a unit configured to perform the method according to any one of claims 1 to 28.

30. A communication apparatus, comprising a processor, wherein when a program or instructions are executed by the processor, the apparatus is caused to perform the method according to any one of claims 1 to 28.

31. A computer-readable storage medium, wherein the storage medium stores a computer program or instructions, and when the computer program or the instructions are executed by a communication apparatus, the method according to any one of claims 1 to 28 is implemented.

32. A computer program product, wherein the computer program product comprises related program instructions, and when the related program instructions are executed, the method according to any one of claims 1 to 28 is implemented.

FIG. 1

FIG. 2a

FIG. 2b

FIG. 2c

UE 3

SL-PRS

SL-PRS

UE 2

UE 1

SL-PRS

UE 4

FIG. 3

| First terminal | Second terminal | Third terminal |
|---|---|---|

S401: First information (indicating a capability of the first terminal to process at least one piece of second information)

S402: The second terminal sends, based on the capability of the first terminal to process the at least one piece of second information, a part or all of second information in the at least one piece of second information to the first terminal

S403: The first terminal receives and processes the at least one piece of second information based on the capability

S404: When perceiving the at least one piece of second information sent to the fist terminal in a first time unit, the third terminal does not send, in a first time length, data or an SL-PRS after the first time unit to the first terminal

FIG. 4

| First terminal | Second terminal | Third terminal |
|---|---|---|

S501: First information (including a first time length required by the first terminal to process at least one piece of second information in a first time unit)

S502: The second terminal sends, in the first time unit, a part or all of second information in the at least one piece of second information to the first terminal

S503: The first terminal receives the at least one piece of second information in the first time unit, and processes, in the first time length, the at least one piece of second information

S504: The second terminal does not send, in the first time length, an SL-PRS or data after the first time unit to the first terminal

S505: When perceiving the at least one piece of second information sent to the first terminal in the first time unit, the third terminal does not send, in the first time length, data or an SL-PRS after the first time unit to the first terminal

S506: The first terminal does not receive or does not process, in the first time length, the SL-PRS or the data after the first time unit

FIG. 5

EP 4 734 623 A1

| Slot 1 | Slot 2 | Slot 3 | Slot 4 | Slot 5 |
|---|---|---|---|---|
| PSCCH +SL-PRS | | | PSCCH +SL-PRS | |

| Slot n | Slot n+1 | Slot n+2 | Slot n+3 | Slot n+4 |
|---|---|---|---|---|
| PSCCH +SL-PRS | PSCCH +SL-PRS | | PSCCH +SL-PRS | |

D=5ms

...

D=5ms

FIG. 6

| First terminal | Second terminal | Third terminal |
|---|---|---|

S701: First information (indicating a capability of the first terminal to process at least one piece of second information, where the first information includes at least one of the following: a quantity of processes supported by the first terminal, and a processing time length required by the first terminal to process, in each process, the at least one piece of second information in a first time unit)

S702: The second terminal sends, based on the capability of the first terminal to process the at least one piece of second information, a part or all of second information in the at least one piece of second information to the first terminal

S703: When the third terminal perceives that the first terminal receives the at least one piece of second information in a second time unit, the third terminal sends, in a third time unit, at least one piece of second information to the first terminal

S704: The first terminal receives and processes the at least one piece of second information based on the capability

FIG. 7

| First terminal | Second terminal | Third terminal |
|---|---|---|

S801: First information (the first terminal supports at least two processes, and the first information includes at least one of the following: a quantity of processes supported by the first terminal, a first time length, and a second time length)

S802: The second terminal sends, in a second time unit, a part or all of second information in the at least one piece of second information to the first terminal

S803: When the third terminal perceives that the first terminal receives the at least one piece of second information in the second time unit, the third terminal sends, in a third time unit, at least one piece of second information to the first terminal

S804: The first terminal receives and processes the at least one piece of second information in the second time unit, and the first terminal receives and processes the at least one piece of second information in the third time unit

S805: The third terminal does not send data or an SL-PRS to the first terminal in the first time length and after the third time unit

S806: The first terminal does not receive or does not process, in the first time length, the SL-PRS or the data after the third time unit

FIG. 8

FIG. 9

1000

Communication
apparatus

Processing
unit — 1010

Transceiver
unit — 1020

FIG. 10

1100

Communication apparatus

1110 — Processor

Interface circuit — 1120

Memory — 1130

FIG. 11

## INTERNATIONAL SEARCH REPORT

| International application No. |
| --- |
| **PCT/CN2024/108304** |

| A. | CLASSIFICATION OF SUBJECT MATTER |
| --- | --- |

H04W64/00(2009.01)i; H04W72/04(2023.01)i

According to International Patent Classification (IPC) or to both national classification and IPC

| B. | FIELDS SEARCHED |
| --- | --- |

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNTXT, ENTXT, CNKI, 3GPP: 定位参考信号, 侧链路, 能力, 用户设备, 发送, 时间, 处理, 进程, sidelink, PRS, LRS, capability, UE, transmit, time, processing, process

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | Lenovo. "R1-2204559 "On Potential SL Positioning Solutions"" <br> *3GPP tsg_ran\wg1_rl1*, No. tsgr1_109-e, 30 April 2022 (2022-04-30), <br> see pages 1-2 and 13 | 1-32 |
| X | CN 115696562 A (VIVO COMMUNICATION TECHNOLOGY CO., LTD.) 03 February 2023 (2023-02-03) <br> see claims 1-42 | 1-32 |
| X | CN 116210288 A (QUALCOMM INC.) 02 June 2023 (2023-06-02) <br> see description, paragraphs 97-122 | 1-32 |
| A | CN 116405998 A (APPLE INC.) 07 July 2023 (2023-07-07) <br> entire document | 1-32 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **25 October 2024** | **25 October 2024** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| International application No. |
|---|
| **PCT/CN2024/108304** |

| Patent document cited in search report | | | Publication date (day/month/year) | Patent family member(s) | Publication date (day/month/year) |
|---|---|---|---|---|---|
| CN | 115696562 | A | 03 February 2023 | None | |
| CN | 116210288 | A | 02 June 2023 | None | |
| CN | 116405998 | A | 07 July 2023 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311011334